# EUROPÄISCHE PATENTSCHRIFT

(11) **EP 4 149 867 B1**
(45) Veröffentlichungstag und Bekanntmachung des Hinweises auf die Patenterteilung: **30.09.2026**
(21) Anmeldenummer: 21721083.0
(22) Anmeldetag: 26.04.2021
(51) Int. Cl.: B65G 25/02, B23Q 7/14, B65G 37/02, B65G 43/10

(54) **MODULARE ANLAGE ZUR HERSTELLUNG VON LEBENSMITTELPRODUKTEN**
MODULAR PLANT FOR PRODUCING FOOD PRODUCTS
INSTALLATION MODULAIRE POUR LA FABRICATION DE PRODUITS ALIMENTAIRES

(30) Priorität: 11.05.2020 EP 20173884
(43) Veröffentlichungstag der Anmeldung: 22.03.2023
(73) Patentinhaber: Bühler GmbH, 51580 Reichshof (DE)
(72) Erfinder: KLEIN, Achim, 58638 Iserlohn (DE); HAUSCHULZ, Kay, 53757 Sankt Augustin (DE); KNAPP, Mark, York, YO607DZ (GB)
(74) Vertreter: Hepp Wenger Ryffel AG
(86) Internationale Anmeldenummer: PCT/EP2021/060776
(87) Internationale Veröffentlichungsnummer: WO 2021/228535

(56) Entgegenhaltungen:
- EP-A1- 0 685 396
- EP-A1- 3 395 726
- WO-A1-2018/157904
- DE-A1- 3 244 232
- DE-U1- 20 202 491
- FR-A1- 2 779 133
- US-A- 4 944 357
- US-A- 5 285 887
- US-A- 5 664 929
- US-A1- 2019 106 283

## Beschreibung

Die Erfindung betrifft Anlage zur Herstellung von Lebensmittelprodukten, insbesondere Schokoladenprodukten, ein Modul für solche eine Anlage und ein Verfahren zum Umrüsten der Anlage.

Für die Herstellung von Süsswaren, im Speziellen von Schokoladenprodukten, werden Produktträger, insbesondere Produktformen typischerweise mittels einer Kette oder eines Endlosbandes zwischen den Bearbeitungseinrichtungen bewegt, wie dies zum Beispiel in US 5180602 A oder DE 3740109 A1 gezeigt ist.

Anlagen zur Fertigung von Lebensmitteln sind häufig Gesamtanlagen mit verschiedenen Bearbeitungsstationen oder Abschnitten. Die bekannten Anlagen werden häufig auf spezielle Verwendungszwecke, zum Beispiel von gefüllten Pralinen oder Tafeln, zugeschnitten, um hohe Durchsätze bei grosser Präzision zu ermöglichen. Die Umrüstung von einem Lebensmittel-Produkt zu einem anderen Lebensmittel-Produkt ist zumeist aufwendig, teilweise sogar unmöglich.

Ketten- und Bandförderer werde in der Regel raumfest zwischen ebenfalls raumfest installierten Bearbeitungsstationen angebracht. Dies ist günstig für grosse Anlagen, bei denen der Produktionsablauf fest vorgegeben ist und die selten umgerüstet werden müssen.

Aus der EP0940086 A1 ist eine Anlage zur Herstellung von Nahrungsmitteln bekannt, bei welcher Abschnitte der Produktionsstrecke durch Transfereinrichtungen, wie Roboter oder pneumatische Umsetzvorrichtungen, überbrückt werden können, indem die in den Produktträger angeordneten Nahrungsmittel zwischen mechanisch voneinander unabhängigen Abschnitten übergeben werden. Die Bearbeitungsstationen sind fest installiert, aber müssen nicht immer alle verwendet werden.

Für kleine Chargen ist aus der EP 3 111 768 A1 eine Anlage bekannt, bei welcher Industrieroboter die Produkte zwischen Bearbeitungsstationen bewegen und gegebenenfalls bereits auf dem Weg bearbeiten. Da Industrieroboter eher langsam sind, ist deren Einsatz für einen grossen Durchsatz, d.h. für die industrielle Fertigung von Lebensmittelprodukten, wenig geeignet.

Für Hersteller qualitativ hochwertiger Lebensmittelprodukte, insbesondere Schokoladenprodukte, die kleinere oder mittlere Mengen an saisonalen Produkten und für Marktests produzieren oder eine flexible industrielle Verarbeitung wünschen, werden anpassbare Anlagen mit leichter Handhabung und hohem hygienischem Standard benötigt.

US 5 664 929 A offenbart ein Modul gemäß dem Oberbegriff des Anspruchs 1.

Es besteht daher die Aufgabe, eine Anlage zur Herstellung von Lebensmittelprodukten, insbesondere Schokoladenprodukten, ein Modul für eine solche Anlage sowie ein Verfahren zur Umrüstung der Anlage zur Verfügung zu stellen, welche die Nachteile des Bekannten überwinden, die insbesondere eine hohe Flexibilität, eine schnelle Umrüstbarkeit und eine bedienerfreundliche, automatisierte Produktion erlauben.

Die Aufgabe wird durch die Merkmale der unabhängigen Ansprüche gelöst. Vorteilhafte Weiterbildungen sind in der nachfolgenden Beschreibung, den Figuren und in den abhängigen Patentansprüchen dargelegt.

Die Anlage nach Anspruch 3 zur Herstellung von Lebensmittelprodukten, insbesondere Schokoladenprodukten, umfasst mehrere Module, in denen die Lebensmittelprodukte bearbeitbar und/oder transportierbar sind. Die Lebensmittel befinden sich auf oder in Produktträgern, zum Beispiel in Alveolen von Produktformen.

Bevorzugt umfasst zumindest ein Teil der Module jeweils eine Bearbeitungseinrichtung.

Bei der Bearbeitungseinrichtung kann es sich um einen Formenanwärmer, eine Kühlstation, eine Giessstation, eine Hülsenbildungsstation, eine Kaltstempelstation, eine Öffnungsbildungsstation, eine Füllstation, eine Einlegestation, eine Rüttelstation, eine Deckelstation, eine Ableckstation, eine Dekorierstation, eine Ausformstation, eine Ein- und/oder Ausstapelstation, eine Sprühstation, eine Druckerstation, eine Einlegestation, eine Verpackungsstation, eine Folienauflegestation und/oder eine Kontrollstation handeln.

Die Module weisen jeweils einen Modulrahmen mit einer Höhe, einer Breite und einer Länge auf.

Die Länge der Module ist dabei jeweils ein Vielfaches der kleinsten Modullänge, also der Länge des kürzesten Modules, die in der Anlage vorkommt. Mit vielfach ist einfach oder mehrfach gemeint.

Die Länge des Moduls entspricht der konstruktiven Länge des Modulrahmens und einer Toleranzlänge.

Die Toleranzlänge beträgt bevorzugt in etwa ein Hundertstel der kleinsten Modullänge, weiter bevorzugt beidseitig 7.5mm, sodass die Modullänge 15mm länger ist als die konstruktive Länge des Modulrahmens.

Mit der Toleranzlänge werden fertigungsseitige Schwankungen bei der Herstellung der Modulrahmen, in der Regel Schweisskonstruktionen, ausgeglichen.

Die kürzeste in der Anlage vorkommende Modullänge wird auch Basislänge genannt.

Bevorzugt umfasst die Anlage Module mit einfacher und zweifacher Basislänge.

Ein Modul einfacher Basislänge kann zum Beispiel Platz für bis zu drei Produktträger bieten, ein Modul zweifacher kleinster Modullänge kann zum Beispiel Platz für bis zu sieben Produktträger bieten.

Die Module lassen sich also in einer Längenrichtung auf einem Raster anordnen, was eine Änderung der Anordnung und eine Vertauschung von Modulen erleichtert.

Bei der Konzeption einer Anlage ist schnell ersichtlich, ob die gewünschten Bearbeitungsstationen in eine gegebene Halle passen und wie die Bearbeitungsstationen angeordnet werden können.

Insbesondere sind die Modulrahmen im Wesentlichen gleichartig gestaltet, so dass es für den Aufbau im Prinzip keine Rolle spielt, welches Modul nach welchem folgt. Bei einer Neuanordnung der Anlage entfallen aufwändigen Planungen und Installationsarbeiten.

Die Module sind bevorzugt so ausgebildet, dass sie in Längsrichtung, bevorzugt beidseitig, an Nachbarmodule anschliessbar oder angeschlossen sind.

Anschliessbar heisst, dass benachbarte Module sich in direkte Berührung bringen lassen und/oder sich in funktionellen Kontakt bringen lassen, so dass Produktträger von einem Modul direkt an das andere Modul weiterleitbar sind.

Bevorzugt schliesst ein Modulrahmen im Wesentlichen direkt an den benachbarten Modulrahmen an. Im idealen Fall weisen die benachbarten Modulrahmen einen Abstand in Grösse der Toleranzlänge auf.

Die Module sind bevorzugt der Länge nach nacheinander angeordnet, sodass zumindest ein Teil der Module eine Reihe bilden, entlang derer die Produktträger transportiert werden.

Bevorzugt bildet ein anderer Teil der Module eine zweite Reihe, sodass Produktträger entlang der ersten Reihe zum Reihenende transportiert werden und über die andere Modulreihe wieder zurück transportierbar sind.

In einer vorteilhaften Ausbildung der Anlage weist die Anlage auf dem Boden fixierbare Schienen mit einem Schienenprofil auf. Die Schienen besitzen bevorzugt ein konvexes Schienenprofil in einem Querschnitt senkrecht zur Verlaufsrichtung. Schienen mit einem konvexen Profil erfüllen die besonderen hygienischen Anforderungen, die bei der Herstellung von Lebensmittelprodukten bestehen. Ein konvexes Profil lässt sich leicht reinigen und besitzt keine Taschen, in welchen sich Reste von Lebensmittelmasse oder andere Verschmutzungen sammeln könnten.

Entsprechend weisen die Module Räder auf, die ein zu dem Schienenprofil komplementäres Radprofil aufweisen, sodass die Räder auf den Schienen abrollen können. Bevorzugt weist jedes Modul vier oder acht Räder auf.

Die Module lassen sich so auf den Schienen platzieren, dass sie in Richtung ihrer Längsausdehnung bewegbar, das heisst rollbar, sind.

Die Anlage umfasst insbesondere ein Schienenpaar, auf dem sich eine Reihe von Modulen anordnen lässt oder zwei Schienenpaare, auf denen sich zwei Reihen von Modulen anordnen lassen.

Die Schienen gewährleisten, dass die Module auf einer definierten Grundhöhe angeordnet sind. Bei einer Montage oder Umsortierung der Module ist daher keine gesonderte Höhenausrichtung notwendig.

In einer weiteren vorteilhaften Ausführung der Anlage weist die Anlage auf einem Boden, zum Beispiel einer Werkhalle, fixierbare Fixiertaschen auf.

Mindestens ein Modul besitzt mindestens ein Fixierelement, insbesondere eine Bolzenanordnung. Durch das Zusammenwirken von Fixierelement und Fixiertasche ist eine ortsfeste Arretierung des Moduls erreichbar oder erreicht.

Die Fixiertasche kann als Aufnahme für einen Bolzen ausgebildet sein, der verschiebbar an einem Modul, insbesondere an dem Modulrahmen, angeordnet ist und in die Aufnahme geführt werden kann.

Mit der Arretierung kann insbesondere verhindert werden, dass ein Modul auf einer Schiene weiterrollt, sobald das Modul seine gewünschte Position eingenommen hat.

Es können alle Module an entsprechenden Fixiertaschen arretiert werden. Es kann aber auch reichen, wenn nur einige Module arretiert werden. Da die Module in Reihe angeordnet sind, werden durch die Arretierung einzelner Module auch die übrigen Module an einer Bewegung gehindert.

Die Fixiertaschen sind bevorzugt entlang mindestens einer Transportrichtung, zum Beispiel entlang der Schienen, in einem Raster anzuordnen oder angeordnet. Das Rastermass, also der Abstand zwischen den Fixiertaschen, ist durch die Länge des kürzesten Moduls bestimmt. Die Fixiertaschen geben damit bevorzugte Positionen für die Anordnung der Module vor.

Da sich das Rastermass durch die Modullänge, also die Länge des Modulrahmens zuzüglich der Toleranzlänge, ergibt, wird sichergestellt, dass sich die Fertigungstoleranzen der Rahmen sich nicht addieren. Dies ist besonders wichtig, wenn die Anlage in einer Rechteckanordnung aufgebaut ist, es also einen Hin- und Rückweg gibt, die gleich lang sein müssen.

Die Fixiertaschen sind bevorzugt an den Boden einer Werkhalle anschraubbar oder dort angeschraubt. Sie sind insbesondere direkt neben einer Schiene platziert oder platzierbar.

Die Anlage kann einen Gabelstapler umfassen, mit dem die Module in eine ausgewählte Reihenfolge gebracht werden und beispielweise auf Schienen gesetzt und von dort entfernt werden können. Die Modulrahmen können dazu Stützvorrichtungen umfassen, an denen die Gabelstaplerarme geführt und abgestützt werden.

In einer bevorzugten Ausbildung der Anlage weist mindestens ein Modul, bevorzugt weisen mehrere Module, weiter bevorzugt alle Module, eine Transporteinrichtung auf zum Transport von Produktträgern in einer linearen Bewegung entlang einer Transportrichtung, bevorzugt entlang der Länge des Moduls.

Die Transporteinrichtungen sorgen bevorzugt für einen einheitlichen oder aneinander anpassbaren Transporttakt. Bevorzugt fördert die Anlage 5-15, insbesondere 10, Produktträger pro Minute.

Die Transporteinrichtung transportiert einen Produktträger, bevorzugt mehrere Produktträger gleichzeitig, durch das Modul. Die Transporteinrichtungen sind bevorzugt so in den Modulrahmen angeordnet, dass die Transporteinrichtung eines Moduls Produktträger von einem ersten benachbart angeordneten Module aufnehmen und an ein zweites benachbart angeordnetes Modul abgeben kann. Insbesondere sind zumindest ein Teil der Transporteinrichtungen derart angeordnet, dass sie eine Transportlinie bilden, wenn die zugehörigen Module auf Schienen angeordnet sind und/oder wenn die zugehörigen Module bündig zueinander angeordnet sind, sodass jeweils eine der aus Länge und Höhe aufgespannten Flächen der Modulrahmen in einer Ebene liegen.

Dazu können die Transporteinrichtungen in jedem Modul den gleichen Abstand zu einer der aus Länge und Höhe des Modulrahmens aufgespannten Flächen und zu einer der aus Breite und Länge des Modulrahmens aufgespannten Flächen aufweisen.

Bei der Transporteinrichtung kann es sich um eine Kette, ein Kettenpaar oder ein Transportband handeln. Die Transporteinrichtung kann Transportschienen umfassen.

Bevorzugt weist die Transporteinrichtung ein Antriebssystem auf, das den Produktträger, insbesondere in Transportrichtung, zieht oder schiebt. Das Antriebssystem kann Antriebsteile aufweisen, die sich zumindest streckenweise mit dem Produktträger zusammen bewegen, wie Ketten mit oder ohne Mitnehmer, ein oder mehrere Bänder mit oder ohne Mitnehmer, Schubleisten mit oder ohne Mitnehmer oder Schubtische mit oder ohne Mitnehmer.

Bevorzugt umfasst
das Antriebssystem zwei parallel zueinander angeordnete Schubleisten mit Mitnehmern und einen elektrischen Linearantrieb zur Bewegung der Schubleisten in und entgegen einer Transportrichtung , sowie mindestens einen Vertikalantrieb für eine Vertikalbewegung der Schubleisten.

Bei dem elektrischen Linearantrieb kann es sich um einen Elektromotor handeln.

Das Antriebssystem bewegt die Schubleisten in Transportrichtung und zieht oder schiebt mit den Mitnehmern den Produktträger in Transportrichtung.

Bevorzugt sind Paare von Mitnehmern vorgesehen, von denen einer an der einen Schubleiste befestigt ist und der andere Mitnehmer an der gegenüberliegenden Schubleiste befestigt ist. Ein Paar von Mitnehmern kann in einen Produktträger angreifen und diesen geradlinig schieben oder ziehen.

An den Schubleisten können jeweils mehrere Mitnehmer angebracht sein, so dass mit den parallel zueinander angeordneten Schubleisten eine Mehrzahl von Produktträgern gezogen oder geschoben werden können.

Die Mitnehmer haben einen Abstand, welcher der Länge der Produktträger entspricht. Als Länge des Produktträgers wird die Abmessung in Transportrichtung betrachtet. Diese kann kürzer sein als die Breite des Produktträgers.

Bevorzugt weist jede Schubleiste drei Mitnehmer in kleinen Modulen, also Modulen mit kleinster Modullänge, und sieben Mitnehmer in grossen Modulen, also Modulen mit zweifacher kleinster Modullänge, auf.

Die Produktträger können an der der Transporteinrichtung zugewandten Seite, in der Regel an der Unterseite, also der von Produkt wegweisenden Seite, eine entgegen der Transportrichtung weisende Anschlagfläche aufweisen, an welcher die Mitnehmern beim Transport anliegen.

Bevorzugt sind die Produktträger symmetrisch ausgebildet, und weisen zwei Anschlagflächen auf, sodass es egal ist, in welcher Richtung die Produktträger auf die Anlage gesetzt und befördert werden.

Nach der maximalen Bewegung der Schubleisten in Transportrichtung werden die Schubleisten über den Vertikalantrieb abgesenkt.

Als Vertikalantrieb kann ein Pneumatikantrieb vorgesehen sein, der entweder das gesamte Antriebssystem mit einem Pneumatikzylinder oder jede Schubleiste mit einem eigenen Pneumatikzylinder bewegt.

Die Schubleisten werden dann mit dem Antriebssystem entgegen der Transportrichtung bewegt, ohne die Produktträger mitzunehmen.

Der Vertikalantrieb bewegt die Schubleisten dann wieder nach oben, wonach der Linearantrieb wieder für eine Vorwärtsbewegung der Produktträger sorgt.

Die Länge der Linearbewegung ist bevorzugt grösser als die Länge eines Produktträgers in Transportrichtung und kleiner als zwei Längen eines Produktträgers.

Nach der Rückwärtsbewegung der Schubleisten liegen die Mitnehmer unter dem nachfolgenden Produktträger. Insbesondere liegt der in Transportrichtung vorderste Mitnehmer unter dem Produktträger, welcher dem zuvor von dem Mitnehmer transportierten Produktträger nachfolgt. Da die Linearbewegung grösser ist als die Länge des Produktträgers in Transportrichtung, wird der Produktträger mit Einsetzen des Vorwärtsantriebs zunächst nicht weitertransportiert, sondern der Mitnehmer muss erst wieder bis zur Anschlagfläche des Produktträgers bewegt werden, ehe der Transport des Produktträgers beginnt.

Der letzte Mitnehmer kann den ersten Produktträger greifen, der das nachfolgende Modul verlässt. Da die Linearbewegung grösser ist als die Länge des Produktträgers in Transportrichtung, muss der Produktträger bezüglich der schon auf dem Modul befindlichen Produktträger nicht exakt positioniert werden. Hat er einen grösseren Abstand, so kann er in der ersten Phase der Linearbewegung, in welcher die anderen Produktträger noch nicht transportiert werden, an die Gruppe dieser Produktträger herangezogen werden.

Dies ist insbesondere von Vorteil, wenn die Produktträger in einem Modul langsamer gefördert werden müssen, zum Beispiel in einem Modul mit einer Leckwalze. Beim Übergang ins nächste Modul müssen die Produktträger beschleunigt werden, um wieder die in der Anlage gewünschte Geschwindigkeit zu erhalten.

Erfindungsgemäß ist das Antriebssystem so an dem Modulrahmen angeordnet, dass zumindest Antriebsteile des Antriebssystems, insbesondere Schubleisten, in oder entgegen der Transportrichtung zumindest zu einer Seite aus dem Modulrahmen herausbewegbar sind, um einen Produktträger von einem benachbarten Modul aufzunehmen oder an ein benachbartes Modul abzugeben.

Die Produktträger können auch beim Übergang von einem Modul zu einem nächsten Modul stabil an die Antriebsteile des Antriebssystems gekoppelt sein.

Die Produktträger liegen zum Beispiel beim Übergang von einem Modul zu einem nächsten Modul stabil auf den Schubleisten.

Zum Montieren oder Entfernen eines Moduls liegt das Antriebssystem komplett innerhalb des Modulrahmens, so dass eine Entnahme aus einer Anlage oder ein Einbau eines Moduls in eine Anlage problemlos erfolgen kann.

Das Antriebssystem umfasst Antriebsteile, die während des Betriebs in und entgegen der Transportrichtung über den Modulrahmen hinausragen und die bezüglich des Modulrahmens derart bewegbar sind, dass sie für die Entnahme oder den Einbau des Moduls in einen Bereich innerhalb des Modulrahmens verschoben werden können. Das Antriebssystem kann über Antriebsteile verfügen, die nicht nur zum Transport der Produktträger bewegbar sind, sondern auch als Ganzes verschiebbar, klappbar, schwenkbar sind.

Ein während des Betriebs über den Modulrahmen herausragender Ketten- oder Bandabschnitt kann zum Beispiel zu Montagezwecken abgeklappt werden.

Es ist zudem möglich, dass die Anlage weitere Module umfasst, bei denen sich das Antriebssystem auch während des Betriebs in und/oder entgegen der Transportrichtung nicht über den Modulrahmen hinaus erstreckt.

Die Module können Gleitflächen aufweisen, auf welche die Produktträger auflegbar und auf welchen die Produktträger verschiebbar sind. Insbesondere sind als Gleitflächen zwei bis acht parallel zueinander angeordnete Gleitschienen vorgesehen.

Module, in denen auf die Produktträger ein Druck ausgeübt wird, können mehr als zwei Gleitschienen aufweisen. Die Produktträger können auf der zum Antriebssystem weisenden Seite, typischerweise der Unterseite, Ausnehmungen aufweisen, welche die Gleitschienen einfassen. Die Ausnehmungen können in stirnseitigen Wänden angeordnet sein, welche auch die Anschlagflächen für den Transport bilden.

Die Gleitschienen sind in Draufsicht zwischen den Schubleisten angeordnet.

Die Module können in einer Reihe auf einem Schienenpaar angeordnet sein. Wenn ein Produktträger das Ende der Reihe erreicht hat, kann er entweder der Anlage entnommen werden oder über oder unter den Modulen zurückgeführt werden.

Bevorzugt werden die Produktträger in einem Kreislauf geführt.

Die Anlage kann auch mindestens zwei Schienenpaare aufweisen. Ausserdem umfasst die Anlage bevorzugt mindestens ein Modul, das als Traversmodul ausgebildet ist. Das Traversmodul verbindet zwei Schienenpaare. Die Fläche einer Produktionshalle kann optimal ausgenutzt werden, indem zwei Schienenpaare mit Traversmodulen zu einer umlaufenden Produktionsstrasse verbunden sind.

Das Traversmodul umfasst zum Beispiel zwei Modulrahmen mit der Länge der Basislänge, die auf einem jeweiligen Schienenpaar stehen und miteinander verbunden sind. Das Traversmodul umfasst eine Transporteinrichtung für den Transport der Produktträger von der einen Modulreihe auf dem ersten Schienenpaar zu der anderen Modulreihe auf dem zweiten Schienenpaar.

Bevorzugt umfasst die Transporteinrichtung des Traversmoduls ebenfalls ein Antriebssystem, das zwei parallel zueinander angeordnete Schubleisten mit Mitnehmern und einen elektrischen Linearantrieb zur Bewegung der Schubleisten in einer Transportrichtung aufweist, sowie mindestens einen Vertikalantrieb für eine Vertikalbewegung der Schubleisten.

Die Transportrichtung verläuft für das Traversmodul allerdings nicht in Längsrichtung sondern senkrecht dazu.

Die Mitnehmer haben einen Abstand, welcher der Breite der Produktträger entspricht, sodass die Produktträger nicht gedreht werden müssen.

Die Produktträger können zunächst entlang einer ersten Modulreihe geführt werden, danach über das Traversmodul zu der zweiten Modulreihe gelangen, über die zweite Modulreihe zurückgeführt geführt werden und gegebenenfalls über ein weiteres Traversmodul zurück auf die erste Modulreihe gelangen. Die Produktträger können sich so in einem geschlossenen Kreislauf bewegen.

Insbesondere ist die Transporteinrichtung, welche die beiden Modulrahmen verbindet, bezüglich des Traversmoduls schwenkbar, klappbar oder wegbewegbar. Dies erlaubt einem Bediener, während einer Produktionsunterbrechung zwischen die Modulreihen zu treten.

Die
Module weisen jeweils mindestens eine Steuereinheit auf, die Schnittstellen zum Datentransfer mit Steuereinheiten der Nachbarmodule umfassen. Die Steuereinheiten der Module lassen sich somit in einer Ring- oder Reihenschaltung verbinden oder sind in einer Ring- oder Reihenschaltung verbunden.

Module mit unterschiedlichen Bearbeitungseinrichtungen können in beliebige Reihenfolgen gebracht werden oder vertauscht werden, ohne dass eine zentrale Steuerung dafür umprogrammiert werden müsste. Die Module können sich ihren Nachbarn zu erkennen geben, welche diese Nachricht weitergeben können, so dass jedes Modul Information über den Zustand der Anlage aufweist.

Die Module können insbesondere Sicherheitssensoren und Notschalter aufweisen. Die Ring- oder Reihenschaltung kann so ausgebildet sein, dass alle Module reagieren, sobald ein Modul sicherheitsrelevante Daten an die Steuereinheiten der Nachbarmodule weiterleitet oder von diesen empfängt. Jedes Modul wird seine Motoren und Pneumatikantriebe abschalten, wenn es notwendig sein sollte.

Die Module sind also gemäss einem dezentralen Sicherheitskonzept organisiert.

In einer vorteilhaften Ausführung der Anlage weist die Anlage eine zentrale Anlagensteuerung auf, und die Module weisen jeweils eine individuelle Steuereinheit auf. Die zentrale Anlagensteuerung ist mit den Steuereinheiten der Module in Verbindung bringbar oder steht mit diesen in einer Verbindung, die einen Datenaustausch ermöglicht.

Die zentrale Anlagensteuerung ist insbesondere darauf ausgelegt, die Anwesenheit der Module zu registrieren und/oder die Anwesenheit zu überprüfen und/oder die Modulreihenfolge automatisch zu erfassen.

Alternativ kann die zentrale Anlagensteuerung eine Eingabeeinheit umfassen, mit welcher die Reihenfolge der Module eingebbar ist.

Jedes Modul kann sich per DHCP bei einem Line Controller melden und eine Identifikation senden. Per SNMP kann der Line Controller die Schalter der Module abfragen, Nachbarmodule zu identifizieren. Der Line Controller kann dann die Module gemäss der physikalischen Anordnung indexieren und diese Information, einschliesslich der IP Adressen der jeweils benachbarten Module, an alle Module zurücksenden.

Über den Line Controller kann dann das Rezept für die Herstellung des Lebensmittelprodukts an die Module gesendet werden.

Der Line Controller kann die Produktionsabfolge in einer virtuellen Linie darstellen und die Module können immer aktuell ihren jeweiligen Status melden.

Die Anlage ist also in der Lage, sich selbst zu organisieren, was eine Neuinstallation und einen Umbau erleichtert.

Typischerweise umfasst die Anlage ausser den Modulen auch festinstallierte Elemente. Diese können, einseitig oder beidseitig, an Module anschliessbar sein. Zu den typischerweise festinstallierten Modulen können eine Kühleinheit, eine Ausformstation und eine Palletierstation gehören.

In der Kühleinheit kühlt das fertige Lebensmittelprodukt zum Beispiel auf eine Temperatur unterhalb der Raumtemperatur ab. Dabei kann sich zum Beispiel Schokolade verfestigen.

In der Ausformstation wird das Produkt vom Produktträger entfernt.

Kühleinheit und Ausformstation sind zumeist am Ende einer Modulreihe angeordnet. Zwischen Kühleinheit und Ausformstation oder nach der Ausformstation kann ein Puffer angeordnet sein, der beispielsweise eingesetzt werden kann, wenn die fertigen Produkte nicht schnell genug von einer Verpackungseinheit übernommen werden können.

Die leeren Produktträger können über ein Traversmodul an eine Palletierstation weitergegeben werden, welche die Module im Anlagentakt mit leeren Produktträgern versorgt. In der Palletierstation können die leeren Produktträger kontrolliert werden, verschmutzte Produktträger aussortiert werden und gegebenenfalls frische Produktträger eingefügt werden. Die Palletierstation kann einen Industrieroboter zum Umsetzen der Produktträger aufweisen.

Die festinstallierten Elemente können ebenfalls ein Transportsystem aufweisen, das sich an das Transportsystem der Module anschliessen lässt und/oder eine Transporteinrichtung mit einem Antriebssystem, das zwei parallel zueinander angeordnete Schubleisten mit Mitnehmern und einen elektrischen Linearantrieb zur Bewegung der Schubleisten in einer Transportrichtung aufweist, sowie mindestens einen Vertikalantrieb für eine Vertikalbewegung der Schubleisten.

Die festinstallierten Elemente können jeweils über eine Steuereinheit verfügen, die sich mit den Steuereinheiten der Module in einer Ring- oder Reihenschaltung verschalten lässt.

In einer beispielhaften Ausführung der Anlage umfasst diese mindestens ein Modul, welches als Bearbeitungseinrichtung einen Depositor aufweist. Der Depositor, zum Beispiel eine Giessmaschine, gibt eine Lebensmittelmasse an den Produktträger ab**.**

Das Modul umfasst eine 3D-Antriebsvorrichtung für eine dreidimensionale Bewegung des Produktträgers, insbesondere einen Roboter oder eine Kombination aus einem linearen Antriebssystem und einem Hubtisch.

Der Produktträger kann dann beispielsweise während der Abgabe eines flüssigen Lebensmittelprodukts unter der der Abgabedüse bewegt werden. Damit kann eine gleichmässige Füllung von Formen erreicht werden oder ein Muster erzeugt werden.

In dem Modul können die Produktträger von einem linearen Transportsystem, insbesondere wie oben beschrieben, an die 3D-Antriebsvorrichtung übergeben werden und wieder von der 3D-Antriebsvorrichtung an ein lineares Transportsystem abgegeben werden.

Die Aufgabe wird ausserdem gelöst durch ein Modul nach Anspruch 1.

Das Modul weist einen Modulrahmen mit einer Höhe, einer Breite und einer Länge auf.

Das Modul weist eine Transporteinrichtung auf zum Transport von Produktträgern in einer linearen Bewegung entlang der Länge des Moduls.

Das Modul weist eine mindestens eine Steuereinheit auf, die Schnittstellen zum Datentransfer mit Steuereinheiten von benachbarten Modulen umfasst, sodass sich die Steuereinheiten in einer Ring- oder Reihenschaltung verbinden lassen.

Das Modul umfasst ein Antriebssystem, welches zwei parallel zueinander angeordnete Schubleisten mit Mitnehmern und einen elektrischen Antrieb zur Bewegung der Schubleisten in einer Transportrichtung aufweist, sowie mindestens einen Vertikalantrieb. Das Antriebssystem ist so an dem Modul, insbesondere einem Modulrahmen, angeordnet, dass die Schubleisten in Transportrichtung zumindest zu einer Seite aus dem Modul herausbewegbar sind, um einen Produktträger von einem benachbarten Modul aufzunehmen oder an ein benachbartes Modul abzugeben.

Das Modul weist bevorzugt eine Länge von 1530mm, welche der kürzesten Modullänge entspricht, eine Länge von 3060mm, welche der zweifachen Basislänge entspricht, oder eine Länge von 4590mm, welche der dreifachen Basislänge entspricht, auf.

Die Aufgabe wird ausserdem gelöst durch Verfahren nach Anspruch 14 zum Umrüsten einer Anlage wie sie oben beschrieben ist.

Mindestens ein Modul, insbesondere wie oben beschrieben, wird aus der Anlage entnommen und/oder mindestens ein Modul, insbesondere wie oben beschrieben, wird in die Anlage eingefügt.

Die Erfindung wird nachfolgend in Ausführungsbeispielen anhand von Zeichnungen erläutert.

Es zeigen
- Figur 1: eine schematische Darstellung einer erfindungsgemässen Anlage in Draufsicht;
- Figur 2: ein Beispiel für ein Modul in perspektivischer Ansicht;
- Figur 3: ein Modul in Seitenansicht;
- Figur 4: eine Detailansicht von einem Rad auf einer Schiene in perspektivischer Ansicht;
- Figur 5: eine Schiene in Schnittansicht;
- Figur 6: eine Schiene und eine Fixiertasche in Schnittansicht;
- Figur 7: eine Transporteinrichtung in einer ersten perspektivischen Ansicht;
- Figur 8: die Transporteinrichtung m in einer zweiten perspektivischen Ansicht;
- Figur 9: einen Teil einer Anlage in Draufsicht;
- Figur 10: einen Teil eines Moduls in seitlicher Ansicht mit einem Detailausschnitt in perspektivischer Ansicht;
- Figur 11: ein Modul mit einer ersten Bearbeitungseinrichtung in perspektivischer Ansicht;
- Figur 12: ein Modul mit einer zweiten Bearbeitungseinrichtung in perspektivischer Ansicht.

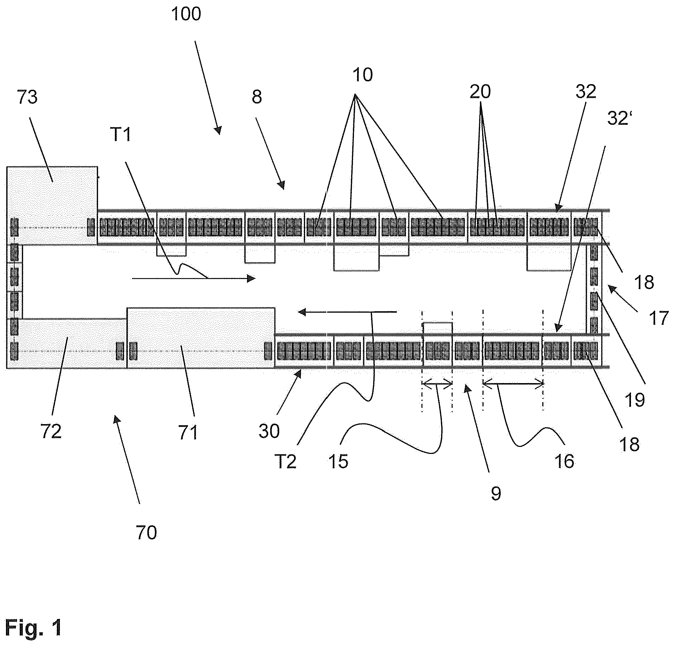

Figur 1 zeigt eine Anlage 100 zur Herstellung von Lebensmittelprodukten, insbesondere Schokoladenprodukten, in Draufsicht.

Die Anlage umfasst Module 10, in denen die Lebensmittelprodukte, vorzugsweise in Produktträgern 20, bearbeitbar und/oder transportierbar sind.

Die Anlage 100 umfasst Module 10 mit einer einfachen kleinsten Modullänge 15 und mit einer Länge 16, die einer zweifachen kleinsten Modullänge 15 entspricht.

Die Module 10 mit einer einfachen kleinsten Modullänge 15 können drei Produktträger 20 aufnehmen, die Module 10 mit einer Länge 16, das heisst einer zweifachen Basislänge, sieben Produktträger 20.

Die Anlage umfasst Schienen 30 und die Module 10 sind jeweils in einer Modulreihe 8, 9 auf einem ersten Schienenpaar 32 und einem zweiten Schienenpaar 32' angeordnet. Die Module 10 sind in Längsrichtung, welche der Transportrichtung T1, T2 entspricht, beidseitig an Nachbarmodule 10 anschliessbar, so dass in den Modulreihen 8, 9 keine Zwischen- oder Übergangselemente notwendig sind.

Die Modulreihen 8, 9 werden durch eine Traversmodul 17 verbunden. Das Traversmodul 17 besitzt ein oder mehrere Modulrahmen 18, bevorzugt zwei Modulrahmen 18, mit kurzer Modullänge 15, die auf den gegenüberliegenden Schienenpaaren 32, 32' stehen, und mindestens ein Traverselement 19, das die Modulrahmen 18 des Traversmoduls 17 verbindet.

Während die Produktträger 10 in den Modulreihen 8, 9 entlang einander entgegengesetzter Transportrichtungen T1, T2 transportiert werden, erfolgt der Transport im Traversmodul 19 senkrecht zu den Transportrichtungen T1, T2.

Die Anlage 100 umfasst festinstallierte Elemente 70, nämlich eine Kühlstation 71, eine Entformstation 72 und eine Palletiertstation 73.

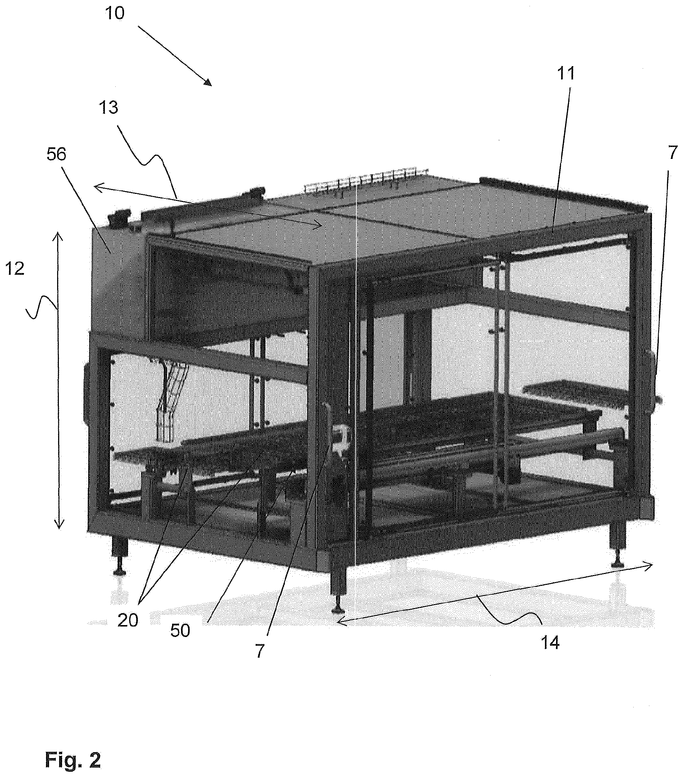

Figur 2 zeigt ein Beispiel für ein Modul 10 in perspektivischer Ansicht.

Das Modul 10 besitzt einen Modulrahmen 11 mit einer Höhe 12, einer Breite 13 und einer Länge 14. Alle Module haben eine Länge 14, die der einfachen oder zweifachen kürzesten Modullänge 15 entspricht (siehe Figur 1).

Das Modul weist hier zum Beispiel eine Länge von 3060mm, welche der zweifachen Basislänge entspricht, auf. Es kann sieben Produktträger 20 aufnehmen, die jeweils eine Länge von 375mm, eine Breite von 900mm und eine Höhe von 45 mm aufweisen.

Das Modul 10 besitzt eine Transporteinrichtung 50 zum Transport der Produktträger 20 und eine individuelle Steuerung, die in einer Steuereinheit 56 angeordnet ist.

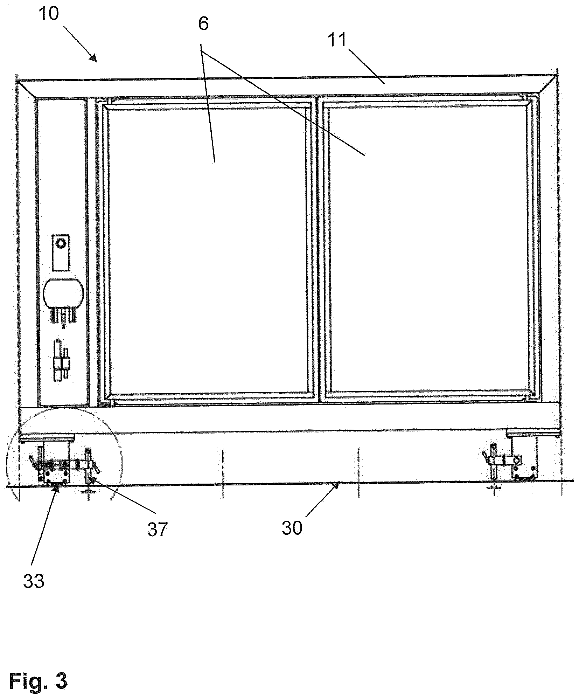

Am Modulrahmen 11 sind Griffe 7 angeordnet. Wenn das Modul mit Rädern 33 ausgestattet ist (siehe Figur 3), kann das Modul 10 leicht verschoben werden.

Figur 3 zeigt ein Modul 10 in Seitenansicht. Am Modulrahmen 11 sind Räder 33 montiert, die auf den Schienen 30 stehen. Das Modul 10 besitzt ausserdem ein Fixierelement 37, das zur Arretierung des Moduls 10 vertikal verschiebbar ist.

Da Modul 10 besitzt an der Frontseite grosse Türen 6, über welche das Innere des Moduls 10 und die Produktträger 20 gut zugänglich sind.

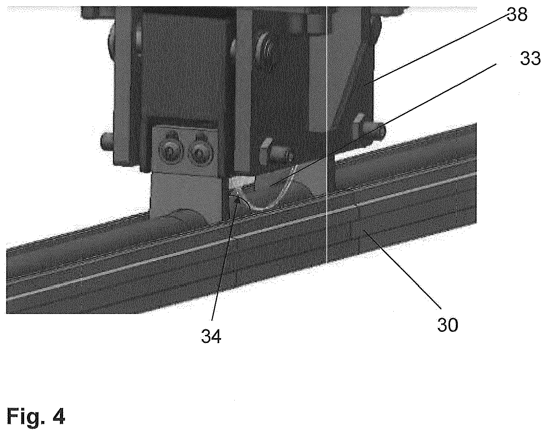

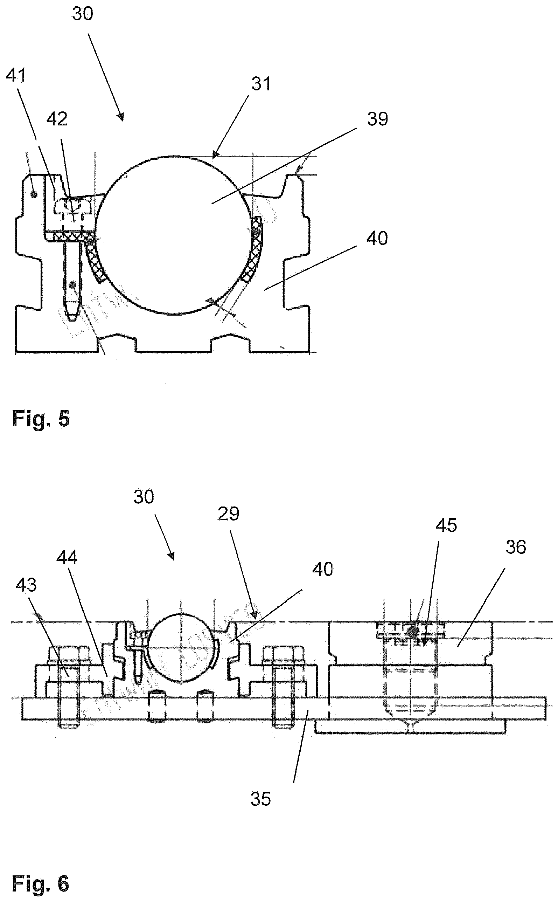

Figur 4 zeigt eine Detailansicht von einem Rad 33 auf einer Schiene 30 in perspektivischer Ansicht. Das Rad 33 weist ein Profil 34 auf, das dem Schienenprofil 31 (siehe Figur 5) entspricht.

Für schwerere Module 10 können auch zwei nacheinander angeordnete Räder 33, die beide auf der Schiene 30 stehen, in einer Radhalterung 38 vorgesehen sein (in der Figur nicht gezeigt).

Figur 5 zeigt eine Schiene 30 in Schnittansicht. Die Schiene besitzt ein konvexes Schienenprofil 31. Ein zylindrischer Führungsstab 39 mit kreisförmiger Querschnittsfläche ist dazu in eine Aufnahmeleiste 40 gelegt und mit einem Verschlusselement 41 fixiert, das mit einer Schraube 42 befestigt ist.

Figur 6 zeigt eine Schiene 30 und eine Fixiertasche 36 in Schnittansicht.

Die Aufnahmeleiste 40 der Schiene 30 ist über am Boden 35 mit Schrauben 43 befestigen Laschen 44 fixiert.

Direkt neben der Schiene 30 ist eine Fixiertasche 36 in den Boden 35 eingelassen, die eine Aufnahme 45 zum Einführen eines Fixierelements 37 (siehe Figur 3) aufweist.

Die Schienen 30 und die Fixiertaschen 36 definieren einen für die Anlage einheitliche Grundhöhe 29.

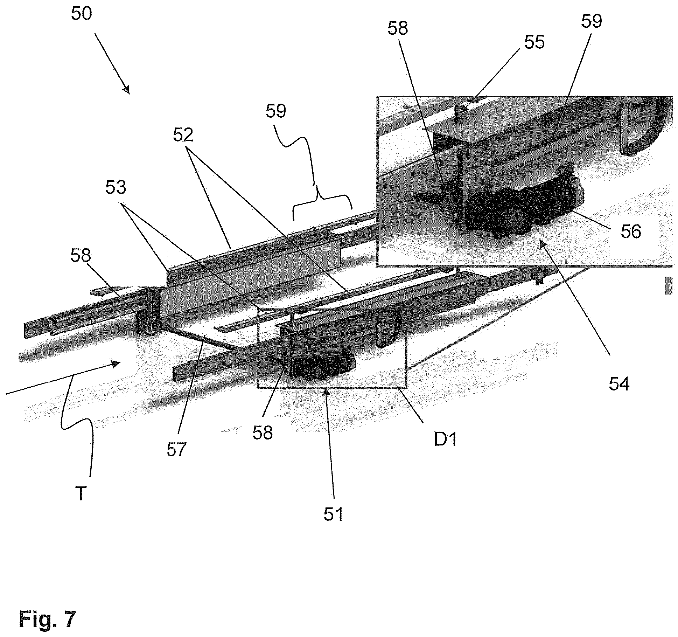

Figur 7 zeigt eine Transporteinrichtung 50 in einer ersten perspektivischen Ansicht mit einem Detail D1 in vergrösserter Ansicht.

Die Transporteinrichtung 50 dient zum Transport von Produktträgern 20 (siehe Figur 1) in einer linearen Bewegung entlang einer Transportrichtung T, nämlich entlang der Länge 14 des Moduls 10 (siehe Figur 2).

Die Transporteinrichtung 50 umfasst ein Antriebssystem 51.

Das Antriebssystem 51 besitzt zwei parallel zueinander angeordnete Schubleisten 52, an denen Mitnehmer 53 angebracht sind.

Das Antriebssystem 5 umfasst einen elektrischen Linearantrieb 54 zur Bewegung der Schubleisten 52 in und entgegen der Transportrichtung T.

Ein Elektromotor 56 treibt zwei mit einer Welle 57 verbundene Ritzel 58 an, die auf einer Zahnstange 59 abrollen.

Die Schubleisten 52 können in Transportrichtung T einen Weg zurücklegen, der grösser ist als der der Abstand 59 zweier benachbarter Mitnehmer 53 auf einer Schubleiste 52.

Das Antriebssystem 5 umfasst ausserdem einen Vertikalantrieb 55, insbesondere mit je einem Pneumatikzylinder pro Schubleiste 52, für eine Vertikalbewegung der Schubleisten 52.

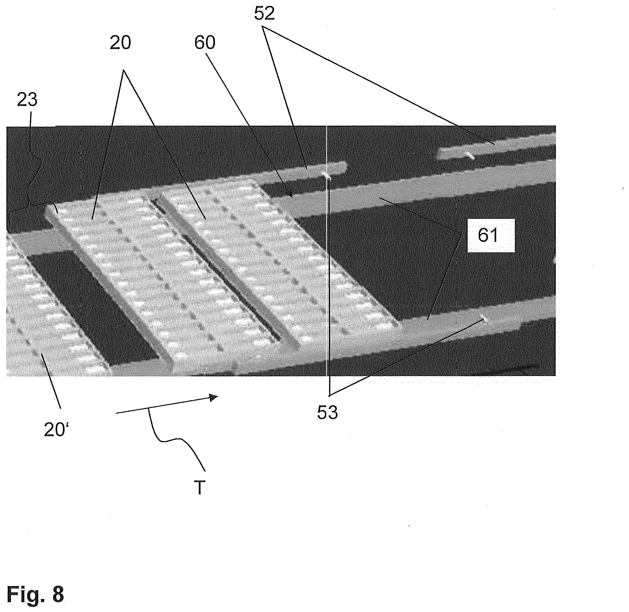

Figur 8 zeigt die Transporteinrichtung 50 in einer zweiten perspektivischen Ansicht.

Es sind jeweils zwei Mitnehmern 53 gegenüberliegend angeordnet zum Schieben/Ziehen eines Produktträgers 20.

Die Schubleisten 52 werden in einem Kreislauf mit vier Schritten bewegt. Ein Schritt ist eine Vorwärtsbewegung in Transportrichtung T, wobei Produktträger 20 von den Mitnehmern in Transportrichtung T bewegt werden. Die Transporteinrichtung 50 ist hier am Ende dieses Schritts gezeigt. Der Deutlichkeit halber sind nur zwei Produktträger 20 gezeigt, der in Transportrichtung T vorderste Produktträger 20 ist weggelassen.

Danach erfolgt ein Absenken der Schubleisten 52 und in einem dritten Schritt eine Rückwärtsbewegung der Schubleisten 52 entgegen der Transportrichtung T.

Weil die Schubleisten 52 in Transportrichtung T einen Weg zurücklegen können, der grösser ist als der der Abstand 59 zweier benachbarter Mitnehmer 53 auf einer Schubleiste 52 (siehe Figur 7), wird der Abstand 23 zum Produktträger 20' vom nachfolgenden Modul überbrückt. Die vorderen Mitnehmern 53 befinden sich nun in etwa unterhalb der Mitte der Produktträger 20 und in der hinterste Mitnehmer in der Nähe der Anschlagfläche des Produktträgers 20' vom nachfolgenden Modul.

In einem vierten Schritt werden die Schubleisten 52 wieder angehoben. Dann beginnt der Kreislauf erneut mit dem ersten Schritt. Dabei wird der letzte Produktträger 20' an die anderen Produktträger 20 herangezogen und anschliessend alle drei Produktträger 20, 20' gemeinsam weiterbewegt.

Die Produktträger liegen dabei auf Gleitflächen 60, die von zwei Gleitschienen 61 bereitgestellt werden.

Die Gleitflächen 60 aller Module haben beispielsweise einen Abstand von 900mm zu der durch die Schienen 30 definierten Grundhöhe 29 (siehe Figur 6).

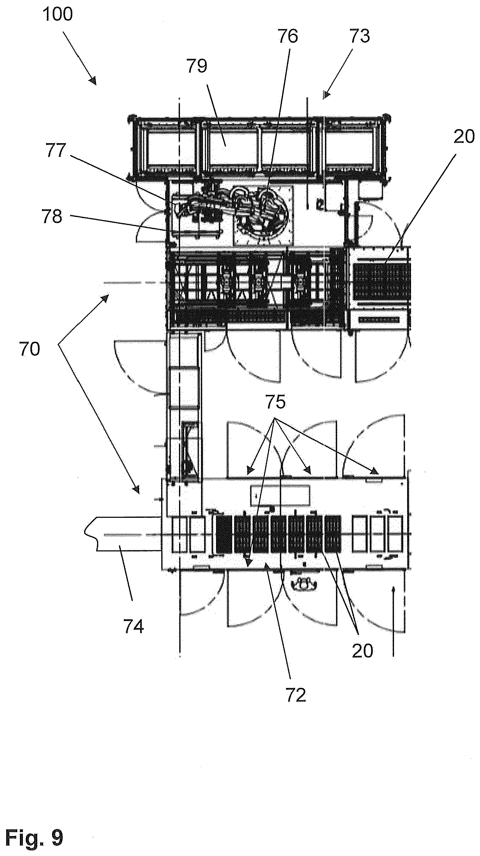

Figur 9 zeigt einen Teil einer Anlage 100 in Draufsicht. Die Anlage 100 umfasst als festinstallierte Elemente 70 unter anderen eine Entformstation 72 und eine Palletiertstation 73.

In der Entformstation 72 werden die Produkte von den Produktträgern 20 auf ein Band 74 geladen, das aus der Entformstation 72 zu einer nicht dargestellten Verpackungsstation führt.

Die Entformstation 72 besitzt beidseitig grosse Türen 75.

Die leeren Produktträger 20 werden der Palletierstation 73 zugeführt.

Ein Industrieroboter 76 entfernt verschmutzte Produktträger 77 und setzt sie auf eine dafür vorgesehene Palette 78, die zum Reinigen aus dem der Palletierstation 73 herausgeführt werden kann.

In der Palletierstation 73 werden ausserdem Stapel 79 mit frischen Produktträgern bevorratet. Der Industrieroboter 76 kann bei Bedarf von diesen Stapeln 79 Produktträger entnehmen.

Von der Palletierstation 73 werden leere Produktträger in ein erstes Modul 20 geschleust.

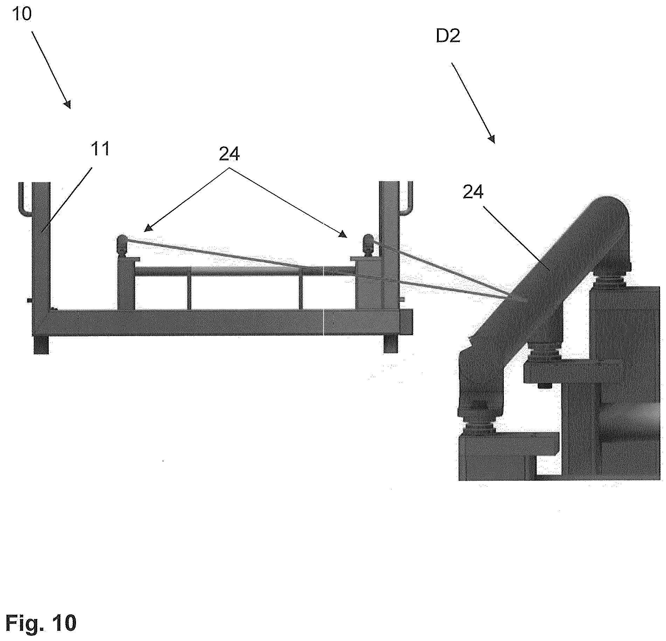

Figur 10 zeigt einen Teil eines Moduls 10 in seitlicher Ansicht mit einem Detailausschnitt D2 in perspektivischer Ansicht.

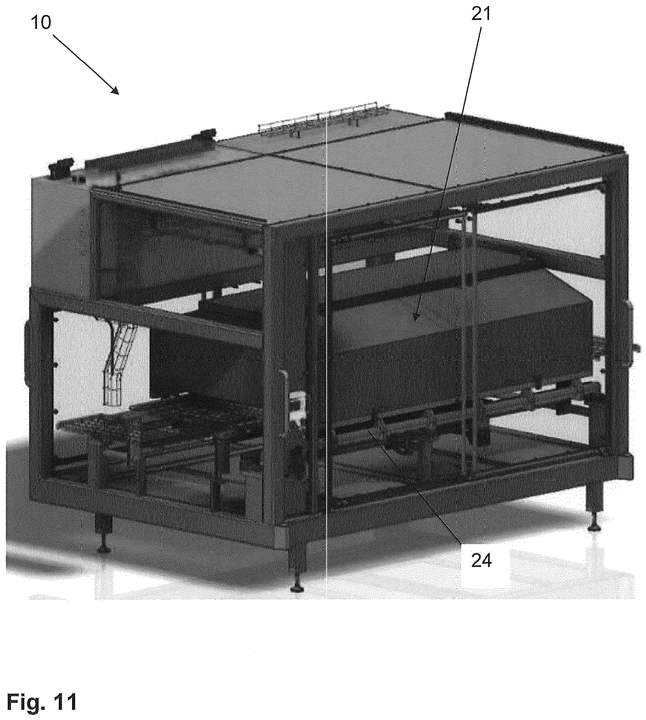

Innerhalb des Modulrahmens 11 sind Trägerschienen 24 angebracht, auf denen Bearbeitungseinrichtungen 21 (siehe Figur 11) abgesetzt und festmontiert werden können.

Einheitliche Modulrahmen 11 können so für unterschiedliche Bearbeitungseinrichtungen verwendet werden.

Figur 11 zeigt ein Modul 10 mit einer ersten Bearbeitungseinrichtung 21 in perspektivischer Ansicht. Im gezeigten Beispiel ist ein Infrarotheizer 21 auf Trägerschienen 24 montiert.

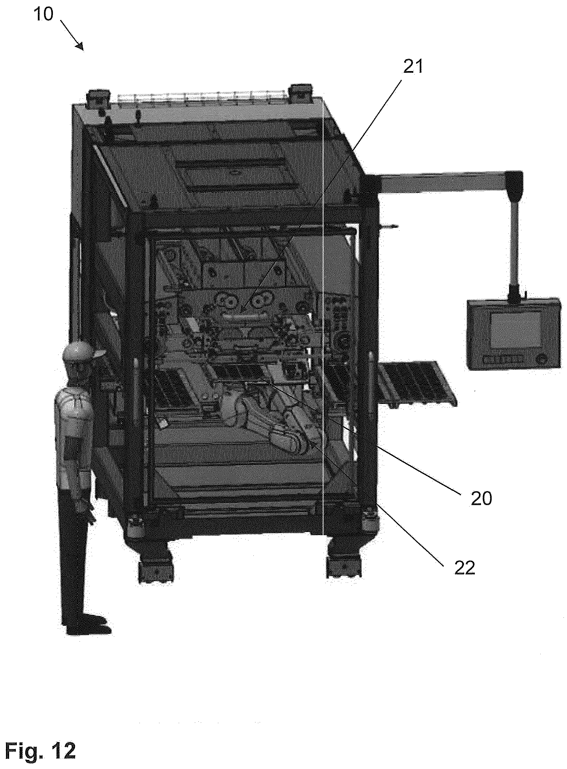

Figur 12 zeigt ein Modul mit einer zweiten Bearbeitungseinrichtung 21 in perspektivischer Ansicht.

Im gezeigten Beispiel ist als Bearbeitungseinrichtung 21 eine Giessmaschine im Modul 10 angeordnet.

Das Modul umfasst ausserdem als 3D-Antriebsvorrichtung 22 einen Roboterarm, der die Formentabletts 20 unterhalb der Giessmaschine 21 bewegt.

## Patentansprüche

1. Modul für eine Anlage zur Herstellung von Lebensmittelprodukten, insbesondere Schokoladenprodukten, umfassend mehrere Module, in denen die Lebensmittelprodukte in Produktträgern (20) bearbeitbar und/oder transportierbar sind, wobei die Länge der Module ein Vielfaches einer kleinsten Modullänge (15) ist,
wobei
das Modul einen Modulrahmen (11) mit einer Höhe (12), einer Breite (13) und einer Länge (14) aufweist,
eine Transporteinrichtung (50) aufweist zum Transport von Produktträgern (20) in einer linearen Bewegung entlang der Länge (14) des Moduls (10),
mindestens eine Steuereinheit aufweist, die Schnittstellen zum Datentransfer mit Steuereinheiten von benachbarten Modulen umfasst, sodass sich die Steuereinheiten in einer Ring- oder Reihenschaltung verbinden lassen,
**dadurch gekennzeichnet, dass** die Transporteinrichtung (50) ein Antriebssystem (51) umfasst, das so an dem Modulrahmen (11) angeordnet ist, dass zumindest Antriebsteile (52) des Antriebssystem (51), die zum Transport der Produktträger bewegbar sind, in Transportrichtung (T, T1, T2) zumindest zu einer Seite aus dem Modulrahmen (11) herausbewegbar sind, um einen Produktträger (20) von einem benachbarten Modul (10) aufzunehmen oder an ein benachbartes Modul (10) abzugeben und
wobei das Antriebssystem (51) zum Montieren oder Entfernen eines Moduls (10) komplett innerhalb des Modulrahmens (11) liegt.

2. Modul gemäss Anspruch 1, wobei das Modul ein Antriebssystem (51) umfasst,
das zwei parallel zueinander angeordnete Schubleisten (52) mit Mitnehmern (53) und
einen elektrischen Linearantrieb (54) zur Bewegung der Schubleisten (52) in einer Transportrichtung (T, T1, T2) aufweist, und
mindestens einen Vertikalantrieb (55) für eine Vertikalbewegung der Schubleisten (52) umfasst,
wobei das Antriebssystem (51) so an dem Modul (10), insbesondere einem Modulrahmen (11), angeordnet ist, dass die Schubleisten (52) in Transportrichtung (T, T1, T2) zumindest zu einer Seite aus dem Modul (10) herausbewegbar sind, um einen Produktträger (20) von einem benachbarten Modul (10) aufzunehmen oder an ein benachbartes Modul (10) abzugeben.

3. Anlage (100) zur Herstellung von Lebensmittelprodukten, insbesondere Schokoladenprodukten,
umfassend mehrere Module (10) gemäss einem der Ansprüche 1 oder 2, in denen die Lebensmittelprodukte in Produktträgern (20) bearbeitbar und/oder transportierbar sind,
wobei zumindest ein Teil der Module (10) jeweils eine Bearbeitungseinrichtung (21) umfasst,
**dadurch gekennzeichnet, dass**
die Module (10) jeweils einen Modulrahmen (11) mit einer Höhe (12), einer Breite (13) und einer Länge (14, 15, 16) aufweisen, wobei die Länge des Moduls ein Vielfaches einer kleinsten Modullänge (15) ist, wobei die Anlage Module (10) mit einfacher kleinster Modullänge (15) und Module (10) mit der Länge (16) einer zweifachen kleinsten Modullänge umfasst,
wobei die Module bevorzugt so ausgebildet sind, dass sie in Längsrichtung, bevorzugt beidseitig, an Nachbarmodule anschliessbar oder angeschlossen sind.

4. Anlage gemäss Anspruch 3, wobei die Anlage auf dem Boden (35) fixierbare Schienen (30) mit einem, insbesondere konvexen, Schienenprofil (31), aufweist, insbesondere ein Schienenpaar (32) oder zwei Schienenpaare (32, 32'),
und die Module (10) Räder (33) aufweisen, die ein zu dem Schienenprofil (31) komplementäres Radprofil (34) aufweisen.

5. Anlage gemäss Anspruch 3 oder 4, wobei
die Anlage (100) auf dem Boden (35) fixierbare Fixiertaschen (36) aufweist, die bevorzugt entlang mindestens einer Transportrichtung (T1, T2) in einem Raster anzuordnen oder angeordnet sind,
und mindestens ein Modul (10) mindestens ein Fixierelement (37), insbesondere eine Bolzenanordnung, aufweist,
und durch das Zusammenwirken von Fixierelement (37) und Fixiertasche (36) eine ortsfeste Arretierung des jeweiligen Moduls (10) erreichbar oder erreicht ist.

6. Anlage gemäss Anspruch 3, wobei das Antriebssystem (51) zwei parallel zueinander angeordnete Schubleisten (52) mit Mitnehmern (53) und
einen elektrischen Linearantrieb (54) zur Bewegung der Schubleisten (52) in einer Transportrichtung (T, T1, T2) aufweist,
sowie mindestens einen Vertikalantrieb (55) für eine Vertikalbewegung der Schubleisten (52) umfasst.

7. Anlage gemäss Anspruch 6, wobei das Antriebssystem (51) so an dem Modulrahmen (11) angeordnet ist, dass die Schubleisten (52) in Transportrichtung (T, T1, T2) zumindest zu einer Seite aus dem Modulrahmen (11) herausbewegbar sind, um einen Produktträger (20) von einem benachbarten Modul (10) aufzunehmen oder an ein benachbartes Modul (10) abzugeben.

8. Anlage gemäss einem der vorhergehenden Ansprüche 3-7, wobei die Module (10) Gleitflächen (60) aufweisen, auf welche die Produktträger (20) auflegbar und auf welchen die Produktträger (20) verschiebbar sind, insbesondere Gleitflächen (60) auf zwei bis acht parallel zueinander angeordneten Gleitschienen (61).

9. Anlage (100) gemäss einem der vorhergehenden Ansprüche 4-8, wobei die Anlage (100) mindestens zwei Schienenpaare (32) und mindestens ein Modul (10) umfasst, das als Traversmodul (17) ausgebildet ist und die beiden Schienenpaaren (32) verbindet, welches insbesondere eine Transporteinrichtung (50) umfasst, die bezüglich des Traversmoduls schwenkbar, klappbar oder wegbewegbar ist.

10. Anlage gemäss einem der vorhergehenden Ansprüche 3-9, wobei die
Module (10) jeweils mindestens eine Steuereinheit aufweisen, die Schnittstellen zum Datentransfer mit Steuereinheiten der Nachbarmodule umfassen, sodass sich die Steuereinheiten der Module in einer Ring- oder Reihenschaltung verbinden lassen oder verbunden sind.

11. Anlage gemäss einem der vorhergehenden Ansprüche 3-10, wobei die Anlage (100) eine zentrale Anlagensteuerung aufweist, die mit Steuereinheiten der Module (10) in Verbindung bringbar ist oder in Verbindung steht, welche insbesondere die Modulreihenfolge automatisch erfasst.

12. Anlage gemäss einem der vorhergehenden Ansprüche 3-11, wobei die Anlage festinstallierte Elemente umfasst, die insbesondere an Module anschliessbar sind.

13. Anlage gemäss einem der vorhergehenden Ansprüche 3-12, wobei die Anlage (100) mindestens ein Modul (10) umfasst, das als Bearbeitungseinrichtung (21) einen Depositor umfasst, und das Modul einen 3D-Antriebsvorrichtung (22) für eine dreidimensionale Bewegung des Produktträgers (20) umfasst, insbesondere einen Roboter oder eine Kombination aus einem Antriebssystem (51) und einem Hubtisch.

14. Verfahren zum Umrüsten einer Anlage (100) gemäss einem der Ansprüche 3-13, wobei mindestens ein Modul (10), insbesondere gemäss einem der Ansprüche 1 bis 2, aus der Anlage (100) entnommen wird und/oder mindestens ein Modul (10), insbesondere gemäss einem der Ansprüche 1 bis 2, in die Anlage (100) eingefügt wird.

## Claims

1. Module for a plant for the production of food products, in particular chocolate products, comprising a plurality of modules, in which the food products can be processed and/or transported in product carriers (20), wherein the length of the modules is a multiple of a smallest module length (15), wherein the module has a module frame (11) with a height (12), a width (13) and a length (14),
has a transport device (50) for transporting product carriers (20) in a linear movement along the length (14) of the module (10),
has at least one control unit which comprises interfaces for data transfer with control units of adjacent modules, such that the control units can be connected in a ring or series circuit,
**characterised in that**
the transport device (50) comprises a drive system (51) which is arranged on the module frame (11) such that at least drive parts (52) of the drive system (51), which are movable for transporting the product carriers, are movable out of the module frame (11) in the transport direction (T, T1, T2) at least to one side, in order to receive a product carrier (20) from an adjacent module (10) or to deliver it to an adjacent module (10) and
wherein the drive system (51) lies completely within the module frame (11) for mounting or removing a module (10).

2. Module according to claim 1, wherein the module comprises a drive system (51) which has two push bars (52) arranged parallel to one another with drivers (53) and an electric linear drive (54) for moving the push bars (52) in a transport direction (T, T1, T2), and comprises at least one vertical drive (55) for a vertical movement of the push bars (52), wherein the drive system (51) is arranged on the module (10), in particular on a module frame (11), such that the push bars (52) are movable out of the module (10) in the transport direction (T, T1, T2) at least to one side, in order to receive a product carrier (20) from an adjacent module (10) or to deliver it to an adjacent module (10).

3. Plant (100) for the production of food products, in particular chocolate products,
comprising a plurality of modules (10) according to one of claims 1 or 2, in which the food products can be processed and/or transported in product carriers (20),
wherein at least a part of the modules (10) each comprises a processing device (21),
**characterised in that**
the modules (10) each have a module frame (11) with a height (12), a width (13) and a length (14, 15, 16), wherein the length of the module is a multiple of a smallest module length (15), wherein the plant comprises modules (10) with a single smallest module length (15) and modules (10) with the length (16) of a double smallest module length,
wherein the modules are preferably designed such that they can be connected or are connected to adjacent modules in the longitudinal direction, preferably on both sides.

4. Plant according to claim 3, wherein the plant has rails (30) which can be fixed on the floor (35) with a, in particular convex, rail profile (31), in particular a pair of rails (32) or two pairs of rails (32, 32'), and the modules (10) have wheels (33) which have a wheel profile (34) complementary to the rail profile (31).

5. Plant according to claim 3 or 4, wherein the plant (100) has fixing pockets (36) which can be fixed on the floor (35) and which are preferably to be arranged or are arranged in a grid along at least one transport direction (T1, T2), and at least one module (10) has at least one fixing element (37), in particular a bolt arrangement, and a stationary locking of the respective module (10) can be achieved or is achieved by the interaction of the fixing element (37) and the fixing pocket (36).

6. Plant according to claim 3, wherein the drive system (51) has two push bars (52) arranged parallel to one another with drivers (53) and an electric linear drive (54) for moving the push bars (52) in a transport direction (T, T1, T2), and comprises at least one vertical drive (55) for a vertical movement of the push bars (52).

7. Plant according to claim 6, wherein the drive system (51) is arranged on the module frame (11) such that the push bars (52) are movable out of the module frame (11) in the transport direction (T, T1, T2) at least to one side, in order to receive a product carrier (20) from an adjacent module (10) or to deliver it to an adjacent module (10).

8. Plant according to one of the preceding claims 3-7, wherein the modules (10) have sliding surfaces (60) on which the product carriers (20) can be placed and on which the product carriers (20) are displaceable, in particular sliding surfaces (60) on two to eight sliding rails (61) arranged parallel to one another.

9. Plant (100) according to one of the preceding claims 4-8, wherein the plant (100) comprises at least two pairs of rails (32) and at least one module (10) which is designed as a traverse module (17) and connects the two pairs of rails (32), which in particular comprises a transport device (50) which is pivotable, foldable or movable away with respect to the traverse module.

10. Plant according to one of the preceding claims 3-9, wherein the modules (10) each have at least one control unit which comprises interfaces for data transfer with control units of the adjacent modules, such that the control units of the modules can be connected or are connected in a ring or series circuit.

11. Plant according to one of the preceding claims 3-10, wherein the plant (100) has a central plant control which can be brought into connection or is in connection with control units of the modules (10), which in particular automatically detects the module sequence.

12. Plant according to one of the preceding claims 3-11, wherein the plant comprises permanently installed elements which can in particular be connected to modules.

13. Plant according to one of the preceding claims 3-12, wherein the plant (100) comprises at least one module (10) which comprises a depositor as a processing device (21), and the module comprises a 3D drive device (22) for a three-dimensional movement of the product carrier (20), in particular a robot or a combination of a drive system (51) and a lifting table.

14. Method for retrofitting a plant (100) according to one of claims 3-13, wherein at least one module (10), in particular according to one of claims 1 to 2, is removed from the plant (100) and/or at least one module (10), in particular according to one of claims 1 to 2, is inserted into the plant (100).

## Revendications

1. Module pour une installation de production de produits alimentaires, en particulier de produits chocolatés, comprenant une pluralité de modules dans lesquels les produits alimentaires peuvent être traités et/ou transportés dans des supports de produit (20), dans lequel la longueur des modules est un multiple d'une plus petite longueur de module (15),
dans lequel le module comprends un châssis de module (11) avec une hauteur (12), une largeur (13) et une longueur (14),
comprenant un dispositif de transport (50) pour le transport de supports de produit (20) selon un mouvement linéaire le long de la longueur (14) du module (10), comprenant au moins une unité de commande qui comprend des interfaces pour le transfert de données avec des unités de commande de modules adjacents, de telle sorte que les unités de commande peuvent être connectées en un circuit en anneau ou en série,
**caractérisé en ce que**
le dispositif de transport (50) comprend un système d'entraînement (51) qui est disposé sur le châssis de module (11) de telle sorte qu'au moins des pièces d'entraînement (52) du système d'entraînement (51), qui sont mobiles pour le transport des supports de produit, sont mobiles hors du châssis de module (11) dans la direction de transport (T, T1, T2) au moins vers un côté, afin de recevoir un support de produits (20) d'un module adjacent (10) ou afin de le délivrer à un module adjacent (10), et
dans lequel le système d'entraînement (51) se trouve entièrement à l'intérieur du châssis de module (11) pour le montage ou le retrait d'un module (10).

2. Module selon la revendication 1, dans lequel le module comprend un système d'entraînement (51) qui a deux barres de poussée (52) disposée parallèlement l'une à l'autre avec des entraîneurs (53) et un entraînement linéaire électrique (54) pour déplacer les barres de poussée (52) dans une direction de transport (T, T1, T2), et comprend au moins un entraînement vertical (55) pour un mouvement vertical des barres de poussée (52), dans lequel le système d'entraînement (51) est disposé sur le module (10), en particulier sur un châssis de module (11), de telle sorte que les barres de poussée (52) sont mobile hors du module (10) dans la direction de transport (T, T1, T2) au moins d'un côté, afin de recevoir un support de produit (20) d'un module adjacent (10) ou de le délivrer un à un module adjacent (10).

3. Installation (100) de production de produits alimentaires, en particulier de produits chocolatés,
comprenant une pluralités de modules (10) selon l'une des revendications 1 ou 2, dans lesquels les produits alimentaires peuvent être traités et/ou transportés dans des supports de produit (20),
dans laquelle au moins une partie des modules (10) comprennent chacun un dispositif de traitement (21), **caractérisée en ce que**
les modules (10) ont chacun un châssis de module (11) avec une hauteur (12), une largeur (13) et une longueur (14, 15, 16), dans laquelle la longueur du module est un multiple d'une plus petite longueur de module (15), dans laquelle l'installation comprend des modules (10) avec une seule plus petite longueur de module (15) et des modules (10) avec la longueur (16) d'une double plus petite longueur de module,
dans laquelle les modules sont de préférence configurés de telle sorte qu'ils peuvent être reliés ou sont reliés à des modules adjacents dans la direction longitudinale, de préférence des deux côtés.

4. Installation selon la revendication 3, dans laquelle l'installation comprends des rails (30) pouvant être fixés au sol (35) avec un profile de rail (31), en particulier convexe, en particulier une paire de rails (32) ou deux paires de rails (32, 32'), et les modules (10) comprennent des roues (33) ayant un profile de roue (34) complémentaire au profile de rail (31).

5. Installation selon la revendication 3 ou 4, dans laquelle l'installation (100) comprend des poches de fixation (36) pouvant être fixées au sol (35), et qui sont de préférence à disposer ou sont disposées dans une trame le long d'au moins une direction de transport (T1, T2), et au moins un module (10) comprend au moins un élément de fixation (37), en particulier un agencement de boulons, et un verrouillage stationnaire du module (10) respectif peut être obtenu ou est obtenu par l'interaction de l'élément de fixation (37) et de la poche de fixation (36).

6. Installation selon la revendication 3, dans laquelle le système d'entraînement (51) a deux barres de poussée (52) disposées parallèlement l'une à l'autre avec des entraîneurs (53) et un entraînement linéaire électrique (54) pour déplacer les barres de poussée (52) dans une direction de transport (T, T1, T2), et comprend au moins un entraînement vertical (55) pour un mouvement vertical des barres de poussée (52).

7. Installation selon la revendication 6, dans laquelle le système d'entraînement (51) est disposé sur le châssis de module (11) de telle sorte que les barres de poussée (52) sont mobiles hors du châssis de module (11) dans la direction de transport (T, T1, T2) au moins d'un côté, afin de recevoir un support de produits (20) d'un module adjacent (10) ou de le délivrer à un module adjacent (10)

8. Installation selon l'une des revendications précédentes 3 à 7, dans laquelle les modules (10) ont des surfaces de glissement (60) sur lesquelles les supports de produits (20) peuvent être posés et sur lesquelles les supports de produits (20) sont déplaçables, en particulier des surfaces de glissement (60) sur deux à huit rails de glissement (61) disposés parallèlement les uns aux autres.

9. Installation (100) selon l'une des revendications précédentes 4 à 8, dans laquelle l'installation (100) comprend au moins deux paires de rails (32) et au moins un module (10) qui est conçu comme un module de traverse (17) et relie les deux paires de rails (32), lequel comprend en particulier un dispositif de transport (50) qui est pivotable, repliable ou déplaçable à l'écart par rapport au module de traverse.

10. Installation selon l'une des revendications précédentes 3 à 9, dans laquelle les modules (10) ont chacun au moins une unité de commande qui comprend des interfaces pour le transfert de données avec les unités de commande des modules adjacents, de telle sorte que les unités de commande des modules peuvent être connectées ou sont connectées en un circuit en anneau ou en série.

11. Installation selon l'une des revendications précédentes 3 à 10, dans laquelle l'installation (100) a une commande centrale d'installation qui peut être mise en liaison ou est en liaison avec des unités de commande des modules (10), laquelle détecte en particulier automatiquement la séquence de module.

12. Installation selon l'une des revendications précédentes 3 à 11, dans laquelle l'installation comprend des éléments installés de manière permanente qui peuvent en particulier être reliés à des modules.

13. Installation selon l'une des revendications précédentes 3 à 12, dans laquelle l'installation (100) comprend au moins un module (10) qui comprend un dépositeur en tant que dispositif de traitement (21), et le module comprend un dispositif d'entraînement 3D (22) pour un mouvement tridimensionnel du support de produits (20), en particulier un robot ou une combinaison d'un système d'entraînement (51) et d'une table élévatrice.

14. Procédé de transformation d'une installation (100) selon l'une des revendications 3 à 13, dans lequel au moins un module (10), en particulier selon l'une des revendications 1 à 2, est retiré de l'installation (100) et/ou au moins un module (10), en particulier selon l'une des revendications 1 à 2, est inséré dans l'installation (100)
